# EUROPÄISCHE PATENTANMELDUNG

(11) **EP 2 246 236 A2**
(43) Veröffentlichungstag der Anmeldung: **03.11.2010**
(21) Anmeldenummer: 10154046.6
(22) Anmeldetag: 19.02.2010
(51) Int. Cl.: B62D 3/12

(54) **Zahnstange**

(30) Priorität: 30.04.2009 DE 102009002741
(71) Anmelder: ZF-Lenksysteme GmbH, 73527 Schwäbisch Gmünd (DE)
(72) Erfinder: Brenner, Alfred, 73540 Heubach (DE)

(57) **Zusammenfassung**

Die Erfindung betrifft eine Zahnstange (1) für eine Zahnstangenlenkung für ein Kraftfahrzeug, die durch ihre Verzahnung (2) mit einem Ritzel im Eingriff steht und durch mindestens ein Druckstück, welches am Zahnstangenrücken (3) angeordnet ist, gegen das Ritzel gedrückt wird. Dabei sind die geometrischen Berührungspunkte der Zahnstange (1) zum Ritzel und zu dem mindestens einem Druckstück über den Hub genau definiert.

## Beschreibung

### Technisches Gebiet

Die Erfindung betrifft eine Zahnstange für eine Zahnstangenlenkung für ein Kraftfahrzeug.

### Stand der Technik

Bei einer Zahnstangenlenkung wird die Zahnstange in Längsrichtung verschiebbar in einem Lenkgehäuse geführt. Ein in dem Lenkgehäuse drehbar gelagertes Ritzel kämmt mit einer Verzahnung der Zahnstange und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeugs führt. Der Eingriff des Ritzels in die Zahnstange wird spielfrei gehalten, indem ein gegenüber dem Ritzel an der Zahnstange anliegendes Druckstück unter Federvorspannung die Zahnstange gegen das Ritzel drückt.

Solche Zahnstangen sind auch als Y-förmige oder V-förmige Zahnstangen bekannt, da die zwei Flächen des Zahnstangenrückens im Querschnitt schräg zueinander angeordnet sind. Die Flächen sind gerade und schließen einen Winkel von ca. 90° ein. Aufgrund von zulässigen Toleranzen bei der Herstellung und durch Verschleiß kann sich dies aber über die Länge der Verzahnung ständig ändern. Dabei kann Überbestimmung entstehen.

Beim Bewegen der Zahnstange und beim Lastwechsel wirken unterschiedliche Kräfte auf die Zahnstange ein. Durch die unterschiedlichen Verzahnungskräfte wird ein Verkippen der Zahnstange verursacht. Somit entstehen während des Verkippens über den Hub ständig neue Berührungspunkte zwischen Zahnstange, Ritzel und Druckstück. Dies geschieht zufällig.

Als Folge daraus entstehen Geräusche und Verschleiß. Zudem wirkt sich dies negativ auf das Lenkgefühl für den Fahrer aus.

### Offenbarung der Erfindung

Der vorliegenden Erfindung liegt daher die Aufgabe zugrunde, die Nachteile aus dem Stand der Technik zu beseitigen und das zufällige Ändern der Berührungspunkte zu verhindern.

Diese Aufgabe wird erfindungsgemäß durch die Merkmale von Anspruch 1 gelöst.

Durch eine genau definierte Geometrie werden die Drehmomente gezielt abgestützt. Mit der definierten Geometrie können somit die Berührungspunkte genau definiert werden. Beispielsweise ist es möglich, ballige Geometrien an der Verzahnung und am Zahnstangenrücken zu erzeugen. Dadurch entstehen Berührungspunkte ohne Überbestimmung, an denen die Kräfte aufgenommen werden. Dabei wird ein Kippen oder auch ein Spiel über den Verlauf der Zahnstange vermieden.

Die Berührungslinien der Zahnstange zum Druckstück und zum Ritzel können konvex oder konkav ausgebildet sein.

Die Auswahl der Geometrie geschieht in Abhängigkeit der gewünschten mechanischen Funktionen der Zahnstange in einem Lenksystem. In Abhängigkeit von den Kräften wird dann die Geometrie so ausgebildet, dass die jeweilige Funktion begünstigt wird.

Unterschiedliche Ausführungen ergeben sich aus den Unteransprüchen.

Nachfolgend ist anhand einer Zeichnung ein Ausführungsbeispiel der Erfindung prinzipmäßig dargestellt. Es zeigt:
Fig. 1 eine Zahnstange im Querschnitt nach dem Stand der Technik
Fig. 2 eine erfindungsgemäße Zahnstange im Querschnitt

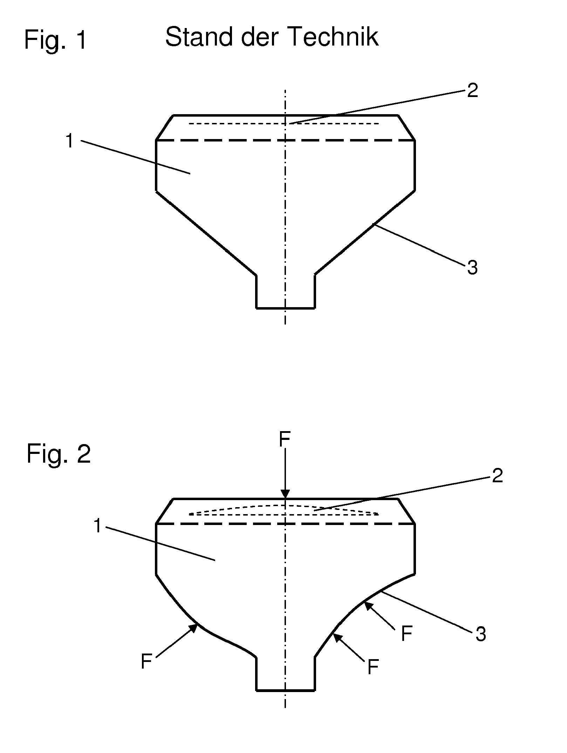

Die Fig. 1 zeigt den Y-förmigen Querschnitt einer Zahnstange 1 nach dem Stand der Technik. Die Verzahnung 2 ist gerade und entspricht damit entsprechenden VZ-Richtlinien. Die Verzahnung 2 greift im Lenksystem in ein hier nicht gezeigtes Ritzel ein.

Die symmetrischen Berührungslinien des Zahnstangenrückens 3 sind ebenfalls gerade und schließen einen Winkel von ca. 90° ein. An den Flächen des Zahnstangenrückens 3 liegt im Lenksystem ein hier nicht gezeigtes Druckstück an.

Die Fig. 2 zeigt den Y-förmigen Querschnitt einer erfindungsgemäßen Zahnstange. Die Verzahnung ist hier ballig bzw. konvex ausgebildet, so dass sich dort genau ein definierter Berührungspunkt mit dem Ritzel ergibt.

Eine Seite des Zahnstangenrückens 3 ist ebenfalls konvex gestaltet. Die gegenüberliegende Seite des Zahnstangenrückens 3 ist in diesem Ausführungsbeispiel konkav geformt, womit sich an dieser Seite zwei Berührungspunkte ergeben.

## Patentansprüche

1. Zahnstange für eine Zahnstangenlenkung für ein Kraftfahrzeug, die durch ihre Verzahnung mit einem Ritzel im Eingriff steht und durch mindestens ein Druckstück, welches am Zahnstangenrücken angeordnet ist, gegen das Ritzel gedrückt wird,
**dadurch gekennzeichnet,**
**dass** die geometrischen Berührungspunkte der Zahnstange zum Ritzel und zu dem mindestens einem Druckstück über den Hub genau definiert sind.

2. Zahnstange nach Anspruch 1,
**dadurch gekennzeichnet,**
**dass** die Berührung zwischen Zahnstange und Ritzel durch mindestens einen Punkt festgelegt ist.

3. Zahnstange nach den Ansprüchen 1 und 2,
**dadurch gekennzeichnet,**
**dass** die Berührung zwischen Zahnstange und Ritzel durch zwei Punkte festgelegt ist.

4. Zahnstange nach den Ansprüchen 1 bis 2,
**dadurch gekennzeichnet, dass** die Berührungslinie der Zahnstange im Bereich der Verzahnung konvex oder konkav ausgebildet ist.

5. Zahnstange nach Anspruch 1,
**dadurch gekennzeichnet,**
**dass** die Berührung zwischen Zahnstange und einem Druckstück durch mindestens einen Punkt festgelegt ist.

6. Zahnstange nach den Ansprüchen 1 und 5,
**dadurch gekennzeichnet,**
**dass** die Berührung zwischen Zahnstange und Druckstück durch zwei Punkte festgelegt ist.

7. Zahnstange nach Anspruch 5,
**dadurch gekennzeichnet, dass** die Berührungslinie des Zahnstangenrückens zu einem Druckstück konvex oder konkav ausgebildet ist.
